Europäisches Patentamt

European Patent Office

Office européen des brevets

(19)

(11) Veröffentlichungsnummer: **0 469 323 A2**

# (12) EUROPÄISCHE PATENTANMELDUNG

(21) Anmeldenummer: **91111074.0**

(22) Anmeldetag: **04.07.91**

(51) Int. Cl.$^5$: **G01L 1/22**

(30) Priorität: **30.07.90 DE 4024128**

(43) Veröffentlichungstag der Anmeldung:
**05.02.92 Patentblatt 92/06**

(84) Benannte Vertragsstaaten:
**DE FR GB**

(71) Anmelder: **HOTTINGER BALDWIN MESSTECHNIK GMBH
Im Tiefen See 45 Postfach 42 35
W-6100 Darmstadt(DE)**

(72) Erfinder: **Probol, Reinhard
Sudetenstrasse 54
W-6080 Gross-Gerau(DE)**

(74) Vertreter: **Brandt, Ernst-Ulrich
Hottinger Baldwin Messtechnik GmbH
Patentabteilung Im Tiefen See 45 Postfach
42 35
W-6100 Darmstadt(DE)**

(54) **Verfahren zum Herstellen und Applizieren eines Dehnungsmessstreifens.**

(57) Die Erfindung schlägt ein Herstellungsverfahren vor, bei welchem vorkonfektionierte Dehnungsmeß-streifen herstellbar sind, die ohne ein Beschichten am Applikationsort an einem Bauteil angebracht werden können. Hierzu wird bereits während der DMS-Herstellung eine Harzschicht (4) an der Trägerfolie angebracht und vorgetrocknet, jedoch noch nicht ausgehärtet.

Fig. 2

EP 0 469 323 A2

Die Erfindung betrifft ein Verfahren zum Herstellen und Applizieren eines Dehnungsmeßstreifens mit einer Trägerschicht, auf der ein Meßgitter angeordnet ist. Diese Dehnungsmeßstreifen werden insbesondere bei Meßgrößenaufnehmern und in der Spannungsanalyse eingesetzt.

Bekannte Applikationsverfahren sehen vor, daß der Dehnungsmeßstreifen durch Spezialklebstoffe, direkt am entsprechenden Aufnehmer verklebt wird. Der Kleber wird üblicherweise mittels Pinsel oder durch Tauchen oder Sprühen unmittelbar vor der Applikation aufgetragen, am Aufnehmer fixiert und in einem Backprozess ausgehärtet.

Die bekannten Verfahren sind zum einen durch die notwendige Beschichtung der einzelnen Dehnungsmeßstreifen vor Ort bei der Aufnehmermontage sehr aufwendig; ferner kann das vom Meßgitter erzeugte Signal stark durch die zwangsläufig sehr unterschiedlichen Klebeschichtstärken und Klebstoffqualitäten ungünstig beeinflußt werden.

Der Erfindung liegt daher die Aufgabe zugrunde, auf kostengünstige und einfache Weise einen Folien-Dehnungsmeßstreifen zu schaffen, dessen Klebeeigenschaften reproduzierbar sind und dessen Meßgenauigkeit nicht wesentlich durch die Applikationsbedingungen beeinflußt wird. Diese Aufgabe wird erfindungsgemäß durch ein Verfahren gemäß Anspruch 1 gelöst.

Die Erfindung ermöglicht die Herstellung eines vorkonfektionierten Dehnungsmeßstreifens, wobei mit einfachen Mitteln sichergestellt wird, daß die Schichtstärke und Viskosität der Klebeschicht bei sämtlichen Dehnungsmeßstreifen einer Charge gleich sind. Dadurch, daß die Klebeschicht zwar trocknet, aber zunächst nicht aushärtet, sind die Dehnungsmeßstreifen unbegrenzt lagerfähig. Besonders geeignet für das erfindungsgemäße Verfahren sind z. B. Trägerschichten aus glasfaserverstärktem Phenolharzpapier.

Das Meßgitter wird vorteilhafterweise durch einen fotolithografischen Prozess erzeugt. Besonders gleichmäßige Schichtstärke wird durch die Verwendung einer Rakel zum Auftrag der Klebeschicht erreicht.

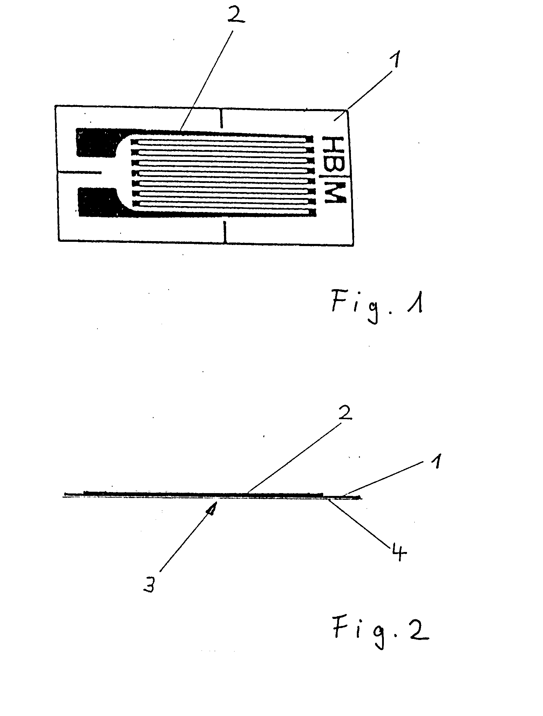

Das erfindungsgemäße Verfahren wird nun für ein Ausführungsbeispiel anhand der Zeichnung näher erläutert. Hierzu zeigt Figur 1 eine Draufsicht auf einen bereits vereinzelten Folien-Dehnungsmeßstreifen; Figur 2 zeigt die zugehörige Seitenansicht.

Folien-Dehnungsmeßstreifen werden üblicherweise im sogenannten Nutzen, das ist eine Herstellungseinheit mit mehreren Dehnungsmeßstreifen - Anordnungen, gefertigt. Hierzu wird beispielsweise eine etwa 25 cm lange und 20 cm breite Trägerfolie auf einen Montagerahmen gespannt. Diese Trägerschicht besteht z. B. aus glasfaserverstärktem Papier, welches in Phenolharz getränkt wurde. Auf der Trägerschicht 1 wird nun durch einen Kaschierprozeß eine Konstantanfolie aufgebracht. Durch einen fotolithografischen Prozeß werden aus den Konstantanfolien mehrere Meßgitter 2 erzeugt. Nach Entfernen des auf dem Meßgitter verbliebenen Fotolackes wird der elektrische Widerstand der einzelnen Dehnungsmeßstreifen durch ein mechanisches Schleifverfahren abgeglichen. Anschließend wird der Nutzen in einem Ofen fertiggebakken, wodurch das Phenolharz, in welchem die Trägerschicht 1 getränkt wurde, bei einer geeigneten Temperatur aushärtet. Der Nutzen wird anschließend gereinigt und die dem Meßgitter 2 gegenüberliegende Rückseite 3 der Trägerschicht 1 wird aufgerauht, um eine Oberflächenvergrößerung zu erreichen. Anschließend wird die Rückseite 3 des gesamten Nutzens mit einer nicht selbstaushärtenden Phenolharzschicht 4 versehen. Das Auftragen dieser Schicht erfolgt mittels einer sogenannten Rakel, das ist ein im wesentlichen zylindriges Werkzeug, welches an seiner Mantelfläche mit einem Gewinde versehen ist, wobei die Gewindetiefe die Stärke der aufzutragenden Schicht bestimmt. Durch das Rakeln lassen sich besonders gleichmäßige Schichtstärken erzielen.

Die Phenolharzschicht 4 wird nun getrocknet; anschließend wird die Schichtstärke gemessen und die einzelnen Dehnungsmeßstreifen des Nutzens durch Ausschneiden vereinzelt. Der Herstellungsprozeß ist damit abgeschlossen und die Dehnungsmeßstreifen können nun unbegrenzt gelagert werden.

Zur Applikation, beispielsweise an einem Kraftaufnehmer, werden die Dehnungsmeßstreifen mit einem Klebeband am Aufnehmer fixiert. Nach dem Fixieren wird der Dehnungsmeßstreifen mit einer Klemmvorrichtung an den Aufnehmer angedrückt und die ganze Anordnung zum Aushärten in einem Ofen gebacken. Die Phenolharzschicht härtet dabei aus und verbindet sich fest mit der Applikationsfläche am Aufnehmer, die zur besseren Haftung aufgerauht sein kann.

Die durch das oben beschriebene Herstellungsverfahren gefertigten Dehnungsmeßstreifen können natürlich nicht nur im Aufnehmerbau verwendet werden, sondern auch bei anderen zu untersuchenden Bauteilen, soweit die Temperatur sich aufbringen läßt.

**Patentansprüche**

1. Verfahren zum Herstellen und Applizieren eines Dehnungsmeßstreifens mit einer Trägerschicht (1), auf der ein Meßgitter (2) angeordnet ist, mit folgenden Verfahrensschritten:

 a. Anbringen einer elektrisch leitenden Schicht auf der Trägerschicht;

 b. Herausarbeiten mehrerer Meßgitter (2) aus der elektrisch leitenden Schicht;

c. Beschichten der den Meßgittern (2) gegenüberliegenden Rückseite (3) der Trägerschicht (1) mit einer Harzschicht (4);

d. Vortrocknen, aber nicht Aushärten dieser Harzschicht (4);

e. Ausschneiden der einzelnen Dehnungsmeßstreifen;

f. Fixieren und Andrücken des Dehnungsmeßstreifens an einem Prüfobjekt bzw. einer Meßfeder, und

g. Aushärten der Harzschicht (4) unter Einwirkung von Temperatur

2. Verfahren nach Anspruch 1, dadurch gekennzeichnet, daß die Trägerschicht (1) aus glasfaserverstärktem Phenolharzpapier besteht.

3. Verfahren nach einem der vorhergehenden Ansprüche, dadurch gekennzeichnet, daß das Meßgitter (2) durch einen fotolithografischen Prozeß hergestellt wird.

4. Verfahren nach einem der vorhergehenden Ansprüche, dadurch gekennzeichnet, daß die Harzschicht (4) mittels einer Rakel aufgetragen wird.

5. Verfahren nach einem der vorhergehenden Ansprüche, dadurch gekennzeichnet, daß die Rückseite (3) der Trägerschicht (1) vor dem Beschichten mit der Harzschicht (4) aufgerauht ist.

6. Verfahren nach einem der vorhergehenden Ansprüche, gekennzeichnet durch die Verwendung bei der Fertigung von Meßgrößenaufnehmern.

Fig. 1

Fig. 2